# EUROPEAN PATENT APPLICATION

(11) **EP 4 660 831 A1**
(43) Date of publication of application: **10.12.2025**
(21) Application number: 24180801.3
(22) Date of filing: 07.06.2024
(51) Int. Cl.: G06F 16/2455

(54) **SYNCHRONIZATION OF DATA STREAMS**

(71) Applicant: Helsing GmbH, 81671 Munich (DE)
(72) Inventor: ALVAREZ, Victor, 81671 Munich (DE)
(74) Representative: Rummler, Felix

(57) **Abstract**

A computer-implemented method of synchronizing data items, the method comprising: determining a plurality of data streams, each including at least one data item; determining a respective provenance record included in the respective data item; and determining, for each data stream, a data item to be synchronized with a respective other data item of another data stream of the plurality of data streams, wherein the determination of the data item to be synchronized is based on the provenance record included in the respective data item.

## Description

### Technical Field

The present disclosure relates to systems, methods, and computer program products for synchronizing data streams.

### Background

A frequent problem in the processing of sensor data is the synchronization of data from different devices or platforms, or different processing pipelines. For example, sensors on different platforms may acquire signals continuously. Processing the data together is challenging because signals of the sensors are not trivially synchronized.

A known solution includes processing data that arrive at a data analysis computer at the same time. This solution is not suitable for non-synchronized platforms, or data streams that have undergone different preprocessing pipelines.

There is a need for systems and methods that overcome these shortcomings.

### Summary

Disclosed and claimed herein are systems, methods, and computer program products for the synchronization of data streams.

A first aspect of the present disclosure relates to a computer-implemented method of synchronizing data items. The method comprises the following steps:
- determining a plurality of data streams, each including at least one data item;
- determining a respective provenance record included in the respective data item; and
- determining, for each data stream, a data item to be synchronized with a respective other data item of another data stream of the plurality of data streams.

The determination of the data item to be synchronized is based on the provenance record included in the respective data item. This allows processing the synchronized data items together. These data items have a commonality in their provenance. This means that data items are prepared for subsequent processing steps depending on entries in the provenance record, so that the synchronization and processing can be steered by the upstream generation of the provenance record.

The method may comprise synchronizing the data items that have been determined to be synchronized. Synchronizing data items may refer to any step that causes the data items to be available to be processed at the same time. Synchronizing may refer to processing the data items at the same time. Synchronizing may comprise selecting data items, e.g. including data items into a tuple, e.g. joining two data items into a pair of data items. The data items and/or the tuple may be stored in one location, jointly output, or processed, e.g., by a parallel processing device.

The data stream identifier may comprise an identifier of a data stream to which the data item pertains. The data stream identifier may comprise a process step identifier indicative of a process step by which the data item is generated. The data stream may describe the data type of the entry.

In an embodiment, the determination of the data item to be synchronized is based on a data stream identifier comprised in the provenance record.

In another embodiment, determining the data item to be synchronized comprises comparing the respective data stream identifiers of the respective data items. The data stream identifier may be indicative of a process, a time of a process, and/or the input data on which the process is based. The determination may comprise comparing the respective data stream identifiers.

In another embodiment, the method further comprises sorting the synchronized data items according to the provenance records, in particular according to any time stamps related to the synchronized data items. The time stamps may be comprised in the provenance records.

This allows downstream devices to implement their own synchronisation procedure on top of this structured output. Downstream devices will have to perform less processing as the synchronized data items are already sorted.

In another embodiment, the method further comprises processing the synchronized data items, for example by a machine learning algorithm. Processing may include supplying the data items to inputs of an algorithm that employs parallel processing. A tuple is a suitable input format for the synchronized data items.

Receiving the data streams may comprise successively receiving a plurality of data items. It is preferred to receive a plurality of respective data streams, wherein each data stream comprises one or more data items.

A data stream can include any sequence of a plurality of data. The plurality of data streams preferably originates from different platforms. A platform may comprise one or more sensor devices configured to generate at least a part of a data item and/or data it the provenance of a data item. For example, each data stream may originate from a respective platform.

Each data item may comprise a time stamp indicative of a generation time at which it was generated by a platform from which the data stream to which it pertains originates.

In another embodiment, the received data items have been generated by processes similar or identical to the method of the first aspect. A second aspect of the present disclosure relates to a computer-implemented method of processing data items. The method comprises the following steps:
- processing, at a generation time, one or more input data items by a process step to generate an output data item; and
- including a provenance record of the output data item into the output data item.

This allows determining a data item that comprises a provenance record. The data item can be processed by other methods alongside a plurality of other data items. The provenance record can be read out and thus allows determining a provenance of the data item, which can be used to correlate the data item to other data items. Optionally, the processing steps may include image augmentation, image segmentation, or object detection. The output data item may be included into an output data stream. Additionally, a time correction parameter and/or a function identifier may be included.

Further exemplary embodiments relate to features that are preferred with respect to the first and/or second aspect.

In an embodiment, the provenance record included in a data item comprises the or a data stream identifier. The data stream identifier is indicative of:
- one or more process steps and/or
- any input data items.

Here, the output data item is generated based on the process steps and/or the input data items. Preferably, at least one subsequent process step is based on the process steps and/or the input data items.

The data stream identifier may be indicative of one or more preceding process steps or input data items. This has the advantage that during a later process step, the data items can be filtered such that only data items that have been processed by a predetermined process step are used as an input for the later process step, or synchronized with other data items. The data stream identifier may be indicative of input data items on which at least one subsequent process step is based. This allows synchronizing all data items with a common node in the provenance.

Including the provenance record of the output data item into the output data item may include or be replaced by associating the provenance record with the output data item or adding the provenance record to the output data item.

In another embodiment, the provenance record comprises:
- a time stamp indicative of the generation time, and/or
- respective time stamps and/or process step identifiers contained in the input data items and/or related to the preceding processing steps and/or creation of the input data items.

This allows processing the provenance record data as one or more key-value pairs. In order to determine a time when a certain process step in the lineage of the data item has been done, the process step identifier may be searched, and in case of a hit, a lookup of the corresponding time stamp allows determining the time. Moreover, the time stamps in the provenance record may serve to synchronize a plurality of data items according to when a process step in the lineage of the data item took place. Alternatively, data items may be synchronized according to when they were generated.

The provenance record may include one or more entries. In this embodiment, each entry comprises a corresponding data stream identifier and a corresponding generation time stamp. In this embodiment, the data stream identifier is indicative of one or more process steps and/or input data items based on which the respective entry is output, in particular a number of preceding process steps on which at least one subsequent process step is based.

In another embodiment, the provenance record comprises a directed acyclic graph (DAG). In this embodiment, the entries of the provenance record are nodes of the DAG. Each node corresponds to a processing step of a previous data item in the provenance of the data item in which the provenance record is included. The node may comprise the data stream identifier and the corresponding time stamp.

In yet a further embodiment, the data items may include sensor data and/or data derived from sensor data, and the sensor data preferably include images. These data are particularly subject to lack of native synchronization or latency issues, which can be overcome using the timestamps as described above.

In yet another embodiment, the process steps include one or more of:
- image augmentation,
- image segmentation,
- and/or object detection.

These image processing algorithms are subject to different latencies and can thus be synchronized by using timestamps from the provenance of the data.

A third aspect of the present disclosure relates to a computer program product for loading into a memory of the system. The computer program comprises instructions, that, when executed by a processor of the system, cause the system to execute a method of the first and/or second aspect of the present disclosure.

In an embodiment, a non-transitory computer-readable storage medium is provided that stores instructions executable by one or more processors. The instructions comprise any of the steps of a method of the first and/or second aspect of the present disclosure.

A fourth aspect of the present disclosure relates to a system comprising one or more processors and one or more storage devices, wherein the system is configured to perform the computer-implemented method of the first and/or second aspect of the present disclosure.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart depicting a computer-implemented method of processing data items;
- Figure 2 shows a flow chart depicting a computer-implemented method of synchronizing data items;
- Figure 3 shows a block diagram depicting a chain of devices, data structures, and a timeline;
- Figure 4 shows a block diagram depicting data structures; and
- Figure 5 shows a schematic drawing of a directed acyclic graph (DAG).

### Detailed description of the preferred embodiments

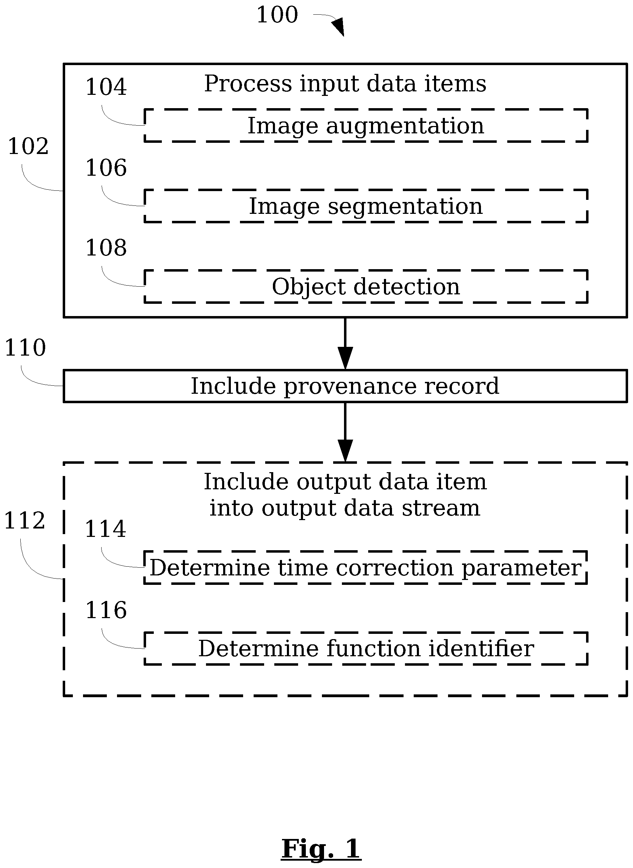

Figure 1 shows a flow chart depicting a computer-implemented method 100 of processing data items. Method 100 allows generating at least a data item comprising a provenance record.

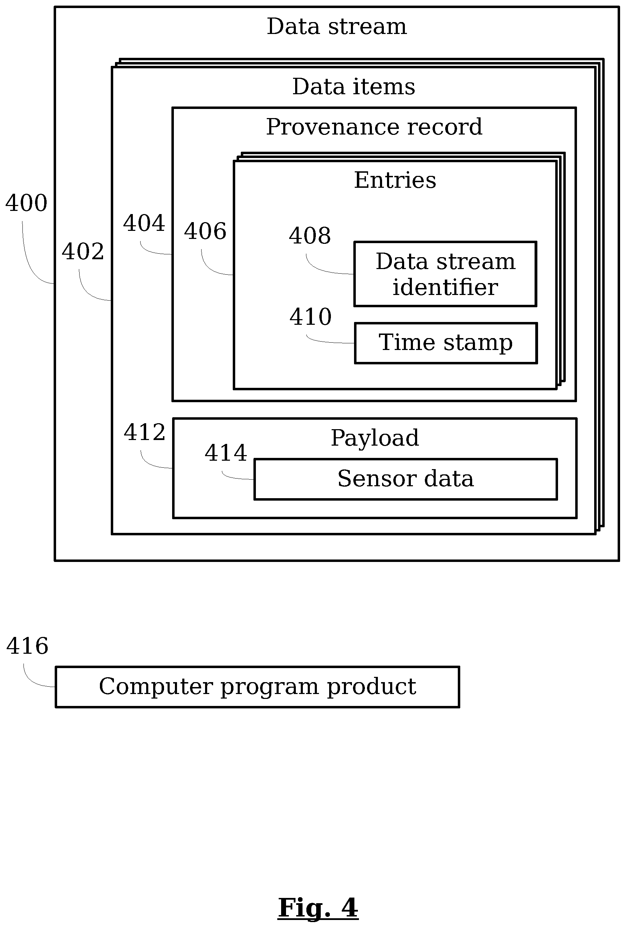

Method 100 begins by processing 102, one or more input data items. In general, the input data items can include any kind of information. They may include raw data, typed raw data, or structured data. It is, however, preferred to process input data items having a structure similar to that of data item 402 described with respect to Figure 4. The processing step 102 may include processing of sensor data. In an example, the input data items include images captured by a camera.

The input data items may also comprise data that has been generated by processing sensor data, for example an augmented camera image that has been created based on raw image frames captured by a camera. Processing step 102 may then include image augmentation, 104, or image segmentation 106, or object detection 108. The processing step 102 leads to the generation of an output data item at a generation time.

The output data item includes the output of processing step 102 as a data payload and may further include a header comprising metadata. The metadata preferably include a provenance record comprising provenance information, such as processes and times of execution of the processes that have led to the generation of the input data, or data that has been processed when generating the input data.

At 110, a provenance record of the output data item is included into the output data item, preferably into the header. A provenance record is a record that describes how entities, such as devices, and processes have influenced a piece of data, i.e. on which preceding processing steps the output data item is based.

The provenance record preferably includes process identifier indicative of processing step 102, and a time stamp indicative of the generation time. In other words, additional information is included into the output data item, so that the output data item can be processed by further algorithms, and these algorithms can determine by which process the output data item has been generated and at what time.

It is preferred to include any existing provenance information in the provenance record, in particular provenance information included in the input data items. For example, an input data item may contain a time stamp indicative of the time when a process step that generated the input data item was performed. It is then preferred to include a copy of this time stamp into the provenance record of the output data item.

It is more preferred to include also an indication of the process step into the provenance record of the output data item. This allows identifying a generation time and process step of an input data item in the provenance of the output data item. Moreover, it is preferred to include a plurality of, or even all, time stamps and process step indicator into the provenance record. This allows identifying an entire process pipeline.

The output data item therefore contains metadata that can be processed by algorithms that also process data payload in the data item. This allows these algorithms to determine what input data the output data item is based on. This means that after this step, the provenance record is typically increased in length and contains more information. The output data item may be similar in structure to the data item 402 described with respect to Figure 4.

At optional step 112, the output data item is included into an output data stream. The output data stream preferably includes a plurality of self-contained data items that have the same structure. For example, when segmenting camera images, the input data items may comprise camera images that form an input data stream of data at the same structure, such as raw images with a header indicating a type and/or operation mode of a camera, and a time of recording.

Each output data item may comprise a segmentation map with a provenance record indicating the type and/or operation mode of the camera and a time of recording, as well as the type of segmentation operation and the time of performing said operation.

Variants of this method may be applied on data repeatedly. For example, the segmentation maps may furthermore be processed to determine centre coordinates of an object. The provenance record is then appended to also include a further process step identifier of this operation and the time when the operation was performed. Also, a plurality of data streams may be processed in parallel in this way, by processing pipelines comprising processing operations that implement method 100.

Then, the outputs of these processing pipelines may arrive at an entity at different later instants in time. The provenance records may provide a bases for joining the output data items from the same or different data streams. In particular, the data items can be synchronized by determining time stamps for corresponding operations and selecting, out of each data stream, only data items with time stamps indicative of similar times.

It is preferred to include, 114, a time correction parameter into the data stream. The time correction parameter indicates a temporal offset of any time stamps in the provenance record to a reference time. The reference time may be a time of an internal clock of a device executing the method.

The reference time may also include a time received from a time server. If the time stamps of the data stream stem from a clock with a time shift to a reference time, then this allows correcting the time when processing the output data items.

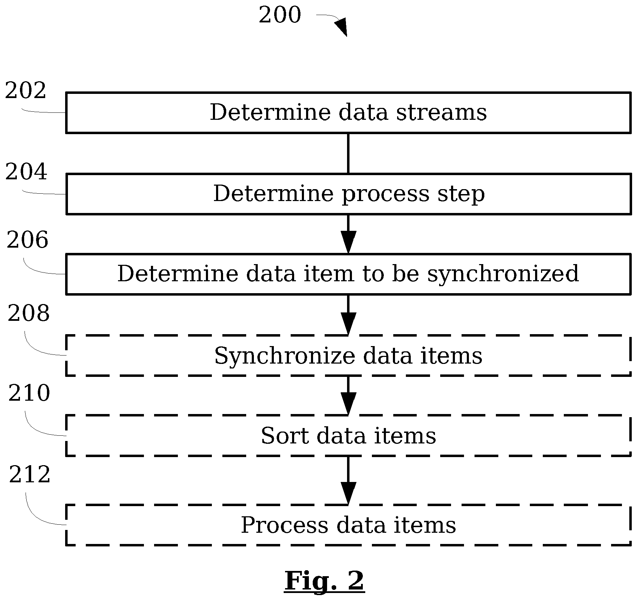

However, the time correction parameter 416 is optional since the generation of the output data items and any subsequent processing, e.g., by method 200 (Fig. 2) can be done by applying any parameter for the time stamps that grows monotonically with real time.

It is further preferred to include, 116, a function identifier into the data stream. The function identifier indicates a function by which the data stream can be processed. For example, if the data stream comprises data items with an image payload, then the function identifier may include radiative augmentations, such as normalization of the grey values. If method 100 is executed by a first network device, then this allows remote control of a device that receives and processes the output data item and processes, because the device can read out the function identifier and execute the function.

Figure 2 shows a flow chart depicting a computer-implemented method 200 of synchronizing data items. Synchronizing may comprise selecting a subset of a plurality of received data items that have been processed at a predetermined time by a predetermined process step.

The method begins by determining, preferably receiving, 202, a plurality of data streams. Each data stream comprising at least one data item. The data items may have been determined by method 100. The data streams may originate from a plurality of platforms, which may comprise computing platforms and/or sensor platforms comprising sensor devices. At 204, a process step is determined based on which the data items are to be synchronized. For example, the process step can comprise processing a previous data item in the provenance of a data item by a given algorithm.

At 206, for each data stream, a data item is determined to be synchronized with a respective other data item of another data stream. The determination is based on a data stream identifier indicative of the respective data stream of the respective data item, and preferably indicative of the process step associated with the data stream. The data stream identifier is comprised in a provenance record included in the respective data item. It is described in more detail in Figure 4.

The process step is generally a process that may in principle have been applied to one or more of the data items. For example, if the data items are of an image type, then the process step may be an image augmentation. If the data items are of a time-series type, then the process step may be a Fourier transform.

For example, the method may comprise receiving an indication of a certain type of process step, e.g. from a user-operable input device. The process step may be chosen by a user as a criterion to which process step the data items should be synchronized.

The process step may also include information on a device that has executed the process step. For example, if the data items are to be synchronized by choosing only data items that were processed by a given device at the same time, then the process step must be chosen to indicate processing by that device.

In particular, the data item may be chosen according to one of the process steps upon which one of the previous data items in the provenance of the data item are based. In other words, all data items may be synchronized that have any data item in their provenance that was processed by a predetermined process step.

For example, in embodiments, all data items that have a camera image in their provenance may be synchronized. In other embodiments, all data items that have a camera image captured by a given camera or in a given time interval may be synchronized. This may be independent of the time of generation or source of the data item itself.

At step 208, the first entry and the second data items are synchronized. This may include any step that allows processing the first entry and the second data items to be processed together. It is preferred to include the first entry and the second data items into a tuple. The synchronization is based on a comparison of the first entry and the second entry.

For example, data items may be synchronized that comprise an indication of a data stream and/or process step that is identical to an indication in the first entry. This allows synchronization of, e.g., camera images detected by the same camera, even if they have been subject to different augmentation steps.

It is further preferred that the comparison is based on respective generation time stamps associated with the entries, in particular included in the entries. As described with respect to Figure 1, the time stamps may relate to the generation time of the first and second data items or to the generation time of any data items in their provenance. That allows synchronizing data items, that are based on data items generated by a process step only if that process step was executed at a predetermined time or within a predetermined time window.

For example, data items based on image data can be synchronized that have all undergone the same augmentation, if the augmentation has been performed at a particular time or in a particular time interval. This is advantageous if, for example, the augmentation has been conducted by a machine learning algorithm that was trained at the same time. In this case, the first and/or second data items can differ systematically depending on the processing time.

Optionally, the data items may be sorted, 210. This allows processing the synchronized data items by a variety of subsequent processes. These processes can rely on the synchronized data items being sorted and will thus need less compute power. This is advantageous if the synchronized data items are supposed to be processed by a plurality of processes since the sorting has to be done only once.

Optionally, the synchronized data items may be processed, 212, by an algorithm. In an example, data items from different data streams are all derived from the same camera data, but each stream has been processed by a different augmentation. Then, supplying the synchronized data items to a machine learning algorithm that processes these augmented images allows processing augmented images were derived from the same frame captured by the camera, even if the different augmentation steps had different compute durations, and even if the compute durations are fluctuating over time.

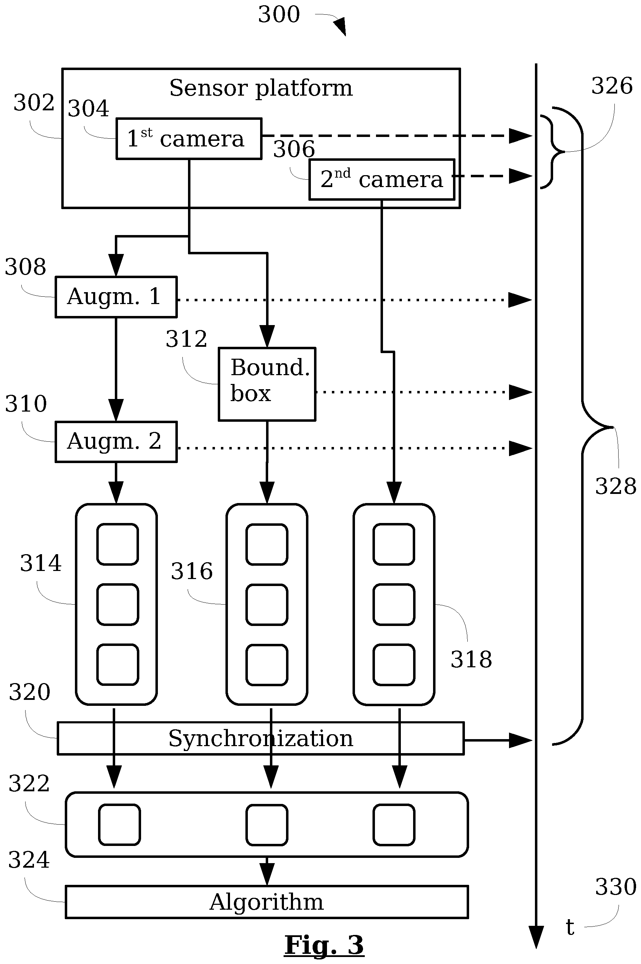

Figure 3 shows a block diagram depicting a chain of devices 300, data structures 314-318 and 322, and a time axis 330 with intervals 326 and 328.

In this embodiment, the chain of devices 300 comprises a sensor platform 302 with a first camera 304 and a second camera 306. First camera 304 and second camera 306 are configured to capture related images, such as views of the same object due to overlapping fields of view (not shown). The cameras generate three different data streams that are sent to the synchronization algorithm 320 and arrive there at different times. The synchronization algorithm 320 synchronizes them, so that they can be processed together by algorithm 324. In this embodiment, some data items 322 are included into a tuple and sent to the algorithm 324.

The images captured by first camera 304 are duplicated to generate two data streams.

The first data stream is processed by a pipeline consisting of first augmentation 308 and second augmentation 310. This pipeline generates a first output data stream 314. This data stream comprises images as a data payload and a provenance record comprising data stream identifiers related to the capturing of the image by the first camera 304, the application of the first augmentation 308, and the application of the second augmentation 310. The provenance record further comprises time stamps for each of these operations that indicate when the operation was complete (indicated by dashed and dotted arrows towards time axis). Therefore, the provenance records contain three key-value pairs.

The second data stream is processed by a pipeline consisting of a boundary box determining algorithm 312 and generates the second data stream 316. The provenance records of the data items of data stream 316 each comprise two entries: A process step identifier and a time stamp related to capturing by first camera 304, and a process step identifier and a time stamp related to the completion of the boundary box operation 312.

The third data stream 318 is simply the output of first camera 306, which is not subject to any additional processing. Data items of data stream 318 contain only one entry in their provenance records: The one related to capturing the image by second camera 306.

The time stamps for related images may differ for the following reasons: The first camera 304 and second camera 306 are not necessarily synchronized (e.g. by hardware triggering) but may be free-running. In this case, they capture their images regularly but at different times. Images that correspond to each other may be defined as images that were taken at similar time, for example within an appropriately chosen interval 326.

However, these images are subject to different processing operations with different latency. For example, a boundary box determination operation 312 may have a longer duration than first augmentation 308, and second augmentation 310 may be completed only after bounding box operation 312. In this case, the data items of the third data stream 318 are ahead of the data items of the second data stream 312, which in turn are ahead of the data items of the first data stream 314. Moreover, these durations may fluctuate.

For example, bounding box determination operation 312 may take longer if the image has higher complexity. In this case, the time at which the items of the second data stream 316 arrives at synchronization 320 fluctuates depending on the current camera images.

If the algorithm 324 is supposed to process corresponding data items together, then the synchronized data items 322 must be determined. This is done by extracting the time stamps related to camera capture operations (indicated by the two dashed arrows next to the cameras), and choosing data items for which the time stamps are within an interval of predetermined length, such as interval 326.

In an alternative example, the interval can be determined such that it has a predetermined length and ends at the time when the synchronization step is executed (interval 328). Then, data items for which the time stamps indicate the lowest times (i.e. earliest times) are chosen that are within interval 328.

By contrast, the time stamps related to the first augmentation step 308, the second augmentation step 310, and the bounding box determination step 312 are ignored because they are not related to the matching key (capturing by a camera). This allows processing corresponding data items together by algorithm 324.

In another example, the synchronization algorithm is configured to synchronize all data items based on images captured by the first camera 304. This preferably includes determining one or more entries in a provenance record that comprises a data stream identifier that relates to capturing of an image by the first camera 304. In this case, not time stamps are used for synchronization.

Figure 4 shows a block diagram depicting data structures.

Data stream 400 generally includes a plurality of data items 402, which may be determined subsequently. Each data item comprises a provenance record 404 and payload data 412. The provenance record 404 comprises one or more entries 406, which each include a data stream identifier 408 and one or more time stamps 410. The data stream identifier 408 may indicate of one or more process steps based on which the data item was generated.

In particular, the data stream identifier 408 may indicate one or more preceding process steps or input data items on which at least one subsequent process step is based. These may include process steps by which the input data items are processed to generate the data item or intermediate data leading to the generation of the data item.

For example, if camera images are augmented by different processes and the payload data 412 of the data item 402 is an augmented image, the data stream identifier 408 may contain an indication of a type of augmentation step by which the data item 402 was produced, or by which a data item in the provenance of data item 402 was produced.

Alternatively or additionally, the data stream identifier may indicate one or more input data items based on which the data item 402 is output. For example, if the payload data 412 is an augmented camera image, the data stream identifier 408 may indicate the raw image from which the augmented image was created.

The time stamps 410 preferably include a time stamp of generation of the data item 402 and one or more further time stamps, each of which is related to a process step indicated in the data stream identifier 408. The further time stamp may indicate when the process step was executed. The time stamps preferably include time stamps that were included in one or more previous data items on which the data item 402 is based.

The provenance record may therefore comprise key-value pairs of an entire provenance tree of the data item 402. The payload data 412 may preferably include sensor data 414, such as camera images.

However, in different embodiments, the entries 406 may only comprise a data stream identifier 408. This may be applicable in cases where it is of interest to save storage space, and where the data stream identifier 408 is sufficient for synchronizing the data items.

The computer program product 416 is suitable for loading into the memory of a computer. It comprises instructions, that, when executed by a processor of the computer, cause the computer to execute any one of methods 100 or 200.

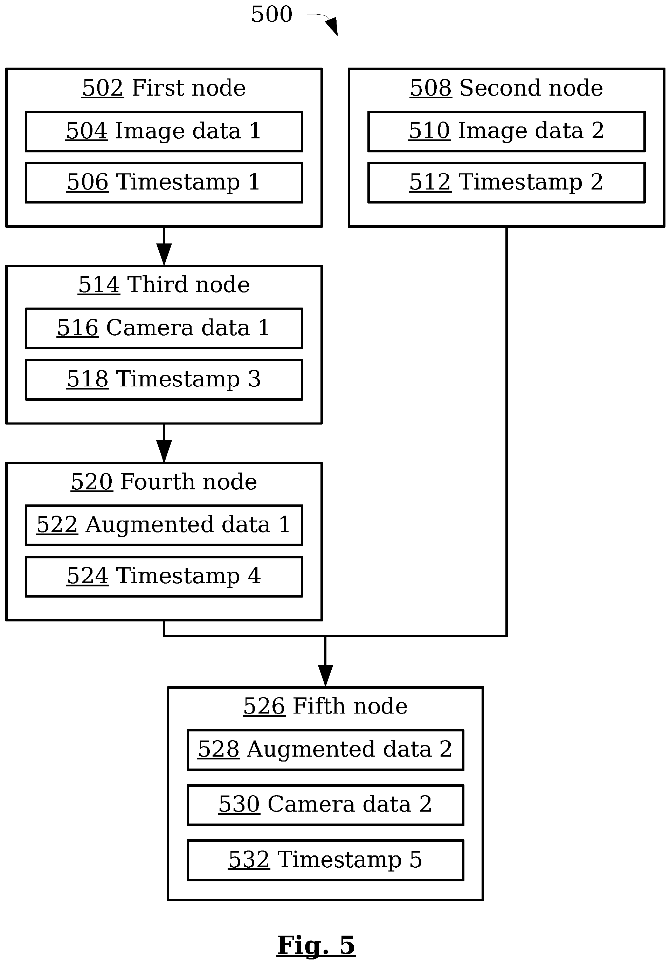

Figure 5 is a schematic drawing of a directed acyclic graph (DAG) 500. The DAG 500 may be comprised in a provenance record of a data item. In particular, the DAG 500 may be comprised in the data item generated by algorithm 324 of Figure 3 which processes the synchronized data items 322.

The DAG 500 comprises nodes, i.e. vertices (shown as boxes) and edges (shown as arrows). Each node and/or edge may be seen as an exemplary embodiment of an entry 406 of a provenance record 404, as described with respect to Figure 4. In particular, a combination of an edge and a node to which the edge leads can be seen as an entry 406 of the provenance record 404.

In the DAG 500, each node 502, 508, 514, 520, 526 comprises one or more identifiers, in particular a data stream identifier 504, 510, 516, 522, 528, 530, and a timestamp 506, 512, 518, 524, 532. The data stream identifier identifies the data streams that form the input of the processing step. In the present example, First and second nodes 502 and 508 relate to capturing images by a camera (cameras 304 and 306 in Fig. 3). the data stream identifiers 504 and 510 therefore contain indications that the input data are image data. The timestamps 506 and 512 indicate the time when the processing by the camera-internal electronics is complete and the image data can be transmitted.

Node 3 relates to augmentation step 308 in Fig. 3. The provenance record 516 indicates that the input data for this step is the first camera data 516 output by the camera related to the first node 502. Timestamp 518 indicates a time when processing by the augmentation is finished.

Node 4 relates to augmentation step 310 in Fig. 3. The provenance record 522 indicates that the input data for this step is the augmented data from the third node 514. Timestamp 524 indicates a time when processing by the second augmentation is finished.

Fifth node 526 relates to processing by the algorithm 324. Fifth node comprises two provenance entries: an entry 528 related to the input data 528, indicating that it is received from the processing step related to the fourth node, i.e. the second augmentation step 310, and a further entry 530 related to second node 508, indicating that it is related to capturing by the second camera 306. Fifth node 526 further includes a time stamp 532 indicating a time of completion of algorithm 324. As can be seen, each node indicates a processing step. Each processing step may be executed at a different device, but some processing steps may be executed at the same device.

The time stamps may comprise any globally monotonically increasing timestamp, i.e. they can have any format that permits storing a number that increases monotonically with time, be it linearly or nonlinearly. In an example this may include wall-clock timestamps. However, shorter data formats may be preferred where memory is to be saved.

Each processing step may be seen as a transformation of a synchronized tuple of input data items, each of them comprising a provenance record, e.g. a DAG similar to DAG 500. The processing step generates an output data item comprising a new provenance record, e.g., a DAG including the provenance records of the input data items. In this example, the provenance record of the output of first camera 304 comprises only the first node 502. Similarly, the provenance record of the output of second camera 306 comprises only the second node 508. The provenance record of the output of the first augmentation step 308 comprises the first node 502 and the third node 514. The provenance record of the output of the second augmentation step 310 comprises the first node 502, the third node 514, and the fourth node 520. The provenance record of the output of the algorithm comprises all nodes shown in Figure 5.

### Reference signs

- 100: Computer-implemented method of processing data items
- 102-116: Steps of method 100
- 200: Computer-implemented method of synchronizing data items
- 202-212: Steps of method 200
- 300: Chain of devices
- 302: Sensor platform
- 304: First camera
- 306: Second camera
- 308: First augmentation operation
- 310: Second augmentation operation
- 312: Bounding box determination operation
- 314: First data stream
- 316: Second data stream
- 318: Third data stream
- 320: Synchronization algorithm
- 322: Synchronized data items
- 324: Algorithm
- 326: First interval
- 328: Second interval
- 330: Time axis
- 400: Data stream
- 402: Data item
- 404: Provenance record
- 406: Entries
- 408: Data stream identifier
- 410: Time stamp
- 412: Payload
- 414: Sensor data
- 416: Computer program product
- 500: Directed acyclic graph (DAG)
- 502: First node
- 504: Stream identifier of first node 502
- 506: Timestamp of first node 502
- 508: Second node
- 510: Stream identifier of second node 508
- 512: Timestamp of second node 508
- 514: Third node
- 516: Stream identifier of third node 514
- 518: Timestamp of third node 514
- 520: Fourth node
- 522: Stream identifier of fourth node 520
- 524: Timestamp of fourth node 520
- 526: Fifth node
- 528: First stream identifier of fifth node 526
- 530: Second stream identifier of fifth node 526
- 532: Timestamp of fifth node 526

## Claims

1. A computer-implemented method of synchronizing data items, the method comprising:
determining (202) a plurality of data streams (400, 314), each including at least one data item (402);
determining a respective provenance record included in the respective data item (402); and
determining (206), for each data stream (400), a data item (402) to be synchronized with a respective other data item of another data stream (316) of the plurality of data streams,
wherein the determination of the data items to be synchronized is based on the provenance record (404) included in the respective data item (402).

2. The method of claim 1, wherein the determination of the data item to be synchronized is based on a data stream identifier (408) comprised in the provenance record (404).

3. The method of claim 2, wherein determining the data item to be synchronized comprises comparing the respective data stream identifiers (408) of the respective data items.

4. The method of any of the preceding claims, wherein determining the data item to be synchronized comprises comparing any time stamps included into the provenance records of the respective data items.

5. The method of any of the preceding claims, further comprising sorting (210) the synchronized data items (322) according to the provenance records, in particular according to any time stamps (410) related to the synchronized data items (322), the time stamps being comprised in the provenance records.

6. The method of any of the preceding claims, further comprising processing (212) the synchronized data items (322), preferably by a machine learning algorithm.

7. The method of any of the preceding claims,
wherein determining the data streams comprises receiving (202) the data streams (402) from a plurality of platforms, the platforms preferably comprising sensor devices (304, 306).

8. A computer-implemented method of processing data items, the method comprising:
processing (102), at a generation time, one or more input data items by a process step to generate an output data item (402); and
including (110) a provenance record (404) of the output data item (402) into the output data item (402).

9. The method of any of claims 1-7, wherein one or more of the data items has been created by the method of claim 8.

10. The method of any of the preceding claims, wherein the provenance record (404) included in a data item comprises the or a data stream identifier (408), wherein the data stream identifier (408) is indicative of one or more process steps and/or any input data items based on which the data item (402) is generated, in particular one or more preceding process steps or input data items on which at least one subsequent process step is based.

11. The method of any of the preceding claims, wherein the provenance record (404) included in a data item comprises:
a time stamp indicative of the generation time of the data item; and/or
respective time stamps (410) contained in any input data items and/or related to any preceding processing steps and/or creation of any input data items upon which the data item is based.

12. The method of any of the preceding claims, wherein the provenance record (404) comprises a directed acyclic graph, DAG.

13. The method of any of the preceding claims,
wherein the data items (402) include sensor data (414) and/or data derived from sensor data (414), wherein the sensor data (414) preferably include images; and/or
wherein the process steps include one or more of: image augmentation, image segmentation, and/or object detection.

14. A computer program product (416) for loading into a memory of a computer, comprising instructions, that, when executed by a processor of the computer, cause the computer to execute a computer-implemented method of any of the preceding claims.

15. A system comprising one or more processors and one or more storage devices, wherein the system is configured to perform the computer-implemented method of any one of claims 1-13.
